# EUROPEAN PATENT SPECIFICATION

(11) **EP 1 552 523 B1**
(45) Date of publication and mention of the grant of the patent: **24.09.2008**
(21) Application number: 02791083.5
(22) Date of filing: 13.12.2002
(51) Int. Cl.: G11B 23/03

(54) **DISC CARTRIDGE AND DISC DRIVE APPARATUS USING THE SAME**
DATENTRÄGERKASSETTE UND DATENTRÄGERLAUFWERKVORRICHTUNG DAMIT
CARTOUCHE DE DISQUE ET UNITE DE DISQUES UTILISANT CETTE CARTOUCHE

(30) Priority: 25.07.2002 KR 2002043866; 17.10.2002 KR 2002063538
(43) Date of publication of application: 13.07.2005
(73) Proprietor: SAMSUNG ELECTRONICS CO., LTD., Suwon-si, Gyeonggi-do 442-742 (KR)
(72) Inventor: EUM, Jae-Yong, Suwon-si 442-470 Gyeonggi-do (KR); KO, Jung-Wan, Suwon-si 442-400 Gyeonggi-do (KR); JANG, Dong-Seob, Seocho-gu 137-030 Seoul (KR); KIM, Kwang, Suwon-si 442-470 Gyeonggi-do (KR); KWEON, Hae-Sub, 910-1801 Jugong 9-danji Apt., Suwon-si 442-470 Gyeonggi-do (KR); CHOI, Han-Kook, 202-1501 Jugong Greenvill Apt., Suwon-si 442-370 Gyeonggi-do (KR)
(74) Representative: Robinson, Ian Michael
(86) International application number: PCT/KR2002/002352
(87) International publication number: WO 2004/012192

(56) References cited:
- EP-A1- 1 152 418
- EP-A2- 0 592 192
- EP-A2- 1 109 167
- WO-A-99/14752
- GB-A- 2 274 939
- JP-A- 2000 156 061
- JP-A- 2000 195 215
- US-A- 5 694 278
- US-A- 5 999 382
- US-B1- 6 459 677

## Description

### Technical Field

The present invention relates to a disc cartridge for accommodating a disc, i.e., an information recording/reproducing medium, and protecting a recording surface of the disc from fingerprints and a disc drive apparatus in which the disc cartridge is loaded for use.

### Background Art

A disc cartridge accommodating a disc is a sort of disc protecting apparatus and is loaded together with the disc in a disc drive apparatus. Typically, the disc cartridge is formed of upper and lower cases and accommodates a disc in an inner space formed between the upper and lower cases. Conventionally, rectangular cases have been widely used as the disc cartridge. That is, a circular disc is accommodated in a space formed inside the rectangular case. However, the rectangular case requires four corner portions which unnecessarily protrude, except for a circular portion, in accommodating a disc, which restricts miniaturization of the disc drive apparatus.

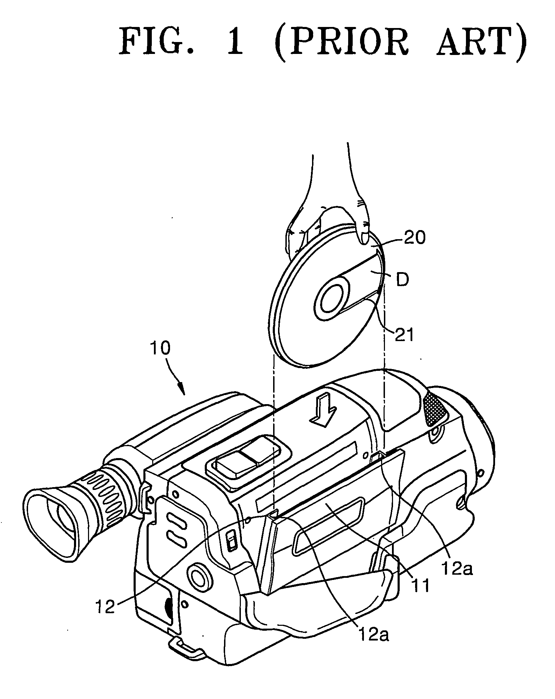

To solve the above problem, a circular disc cartridge 20 as shown in FIG.1 has been suggested. The disc cartridge 20 is formed circularly to correspond to the shape of a disc D so that a compact and smoothly rounded disc cartridge to obtain an aesthetic effect can be manufactured. However, the disc cartridge 20 having a circular shape can be unstably loaded into the disc drive apparatus, for example, a camcorder 10 shown in the drawing. That is, when the disc cartridge 20 is inserted into a holder 12 provided inside a door 11 and then the door 11 is closed, the disc cartridge 20 is easily rotated and thus positioned at an inaccurate position because of the circular shape of the disc cartridge 20. An access hole 21 is formed on the upper and lower surfaces of the disc cartridge 20 so that a recording/reproducing unit of a disc drive apparatus such as the camcorder 10 may access the disc D. When the disc cartridge 20 is loaded out of its accurate position, since the position of the access hole 21 changes, the recording/reproducing unit cannot access the disc D properly.

EP-A-1,109,167 discloses a disc cartridge having a round portion with a circular arc shape whose centre substantially coincides with that of a disk and is formed at the forefront edge of the disc cartridge in the direction of insertion into a disk drive unit, and the remaining portion is rectangular. This document provides basis for the pre-characterising portion of independent claim 1 appended hereto.

US-A-5,694,278 discloses a cartridge for a disk drive having a rigid shell with two keying grooves along the top and bottom edges of one side of the cartridge. These mate with projections on the cartridge receiving slot in the drive.

GB-A-2,274 939 discloses a disc cartridge having a substantially square shell assembly.

### Disclosure of the invention

To solve the above and other problems, the present invention provides a compact disc cartridge that can stably perform a loading operation into a disc drive apparatus, and a disc drive apparatus using the disc cartridge.

According to an aspect of the present invention there is provided a disc cartridge including a case in which a disc is accommodated and which is guided by both side walls of a holder when inserted in a holder of a disc drive apparatus, wherein the case comprises: flat surface portions formed to have a surface contact with both side walls of the holder; and curved surface portions connecting the flat surface portions; the flat surface portions comprising first flat surface portions formed at both sides of the case along a first linear direction; characterised in that: the flat surface portions further comprise second flat surface portions formed at both sides of the case along a second linear direction which is perpendicular to the first linear direction; wherein a length Y between the second flat surface portions is greater than a length X between the first flat surface portions; and a step portion extending outwardly forming a step is further provided at one side of the first flat surface portion; wherein the length Y between the second flat surface portions is shorter than a sum of the length X between the first flat surface portions and a length Z of the step portion extending outwardly.

Preferably, there is provided a system according to claims 3 and 5.

### Brief Description of the Drawings

FIG. 1 is a view illustrating a conventional disc cartridge and a camcorder using the disc cartridge for recording and reproduction;

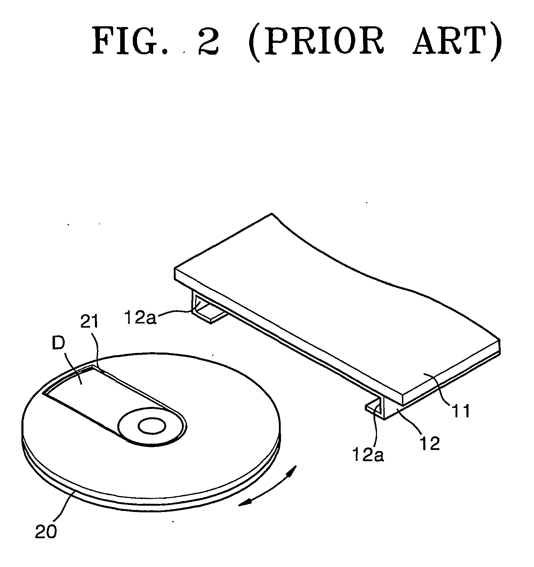

FIG. 2 is a view illustrating major parts of FIG. 1;
FIG. 3 is a view illustrating a disc cartridge according to an embodiment of the present invention and a camcorder using the disc cartridge;
FIG. 4 is a magnified view illustrating the disc cartridge shown in FIG. 3; and
FIGS. 5 through 8 are views illustrating a variety of cases of inserting the disc cartridge shown in FIG. 4 into a holder of a disc drive apparatus.

### Best mode for carrying out the Invention

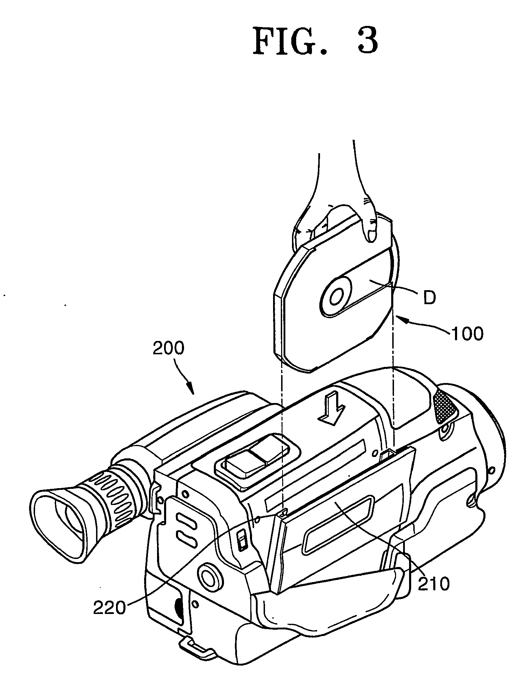

FIG. 3 shows a disc cartridge 100 and a disc drive apparatus 200 in which the disc cartridge 100 is loaded for use. That is, the disc cartridge 100 where the disc D is loaded is inserted into a holder 220 of the disc drive apparatus 200. Then, when a door 210 is closed, the disc cartridge 100 is loaded and a recording/reproducing operation can be performed.

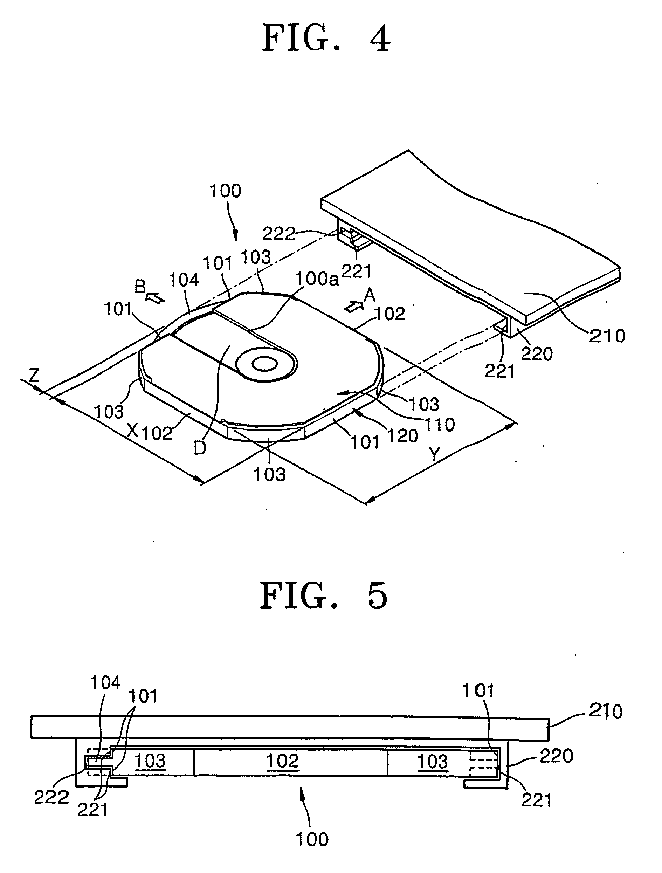

The disc cartridge 100, as shown in FIGS. 3 and 4, includes upper and lower cases (110 and 120) which accommodate the disc D. The upper and lower cases (110 and 120) are coupled via a hinge (not shown) to be capable of moving in opposition or toward each other. Hereunder, the upper and lower cases (110 and 120) are referred to as a case. Reference numeral 100a denotes an access hole which is opened at the upper and lower surfaces of the disc cartridge 200 so that a turntable (not shown), a clamper (not shown), and a pickup (not shown) can access the disc D to perform a recording/reproducing operation in the disc drive apparatus 200.

The case (110 and 120) adopted in the disc cartridge 100 according to an embodiment of the present invention has a basic circular shape to enable a compact disc cartridge as well as a partially linear portion. That is, as shown in FIG.4, the case (110 and 120) has a circular shape having rounded corner portions. When a direction in which the disc cartridge 100 is inserted into the holder 220 provided inside the door 210 of the disc drive apparatus, as indicted by arrow A, is referred to as a first linear direction, the case (110 and 120) includes a first flat surface portion 101 formed at both lateral sides of the case (110 and 120) parallel to the first linear direction and a second flat surface portion 102 formed at the other lateral sides along a second linear direction which is perpendicular to the first linear direction. Consequently, since the remaining portion other than the first and second flat surface portions 101 and 102 is circular, the case (110 and 120) has a shape in which curved surface portions 103 respectively connect the flat surface portions 101 and 102. The first and second flat surface portions 101 and 102 have a surface contact with side walls 221 of the holder 220 and serve as a guide when the disc cartridge 100 is inserted into the holder 220. That is, when the entire case is formed circularly as in the conventional technology, since the cases almost have a point contact with the inner walls of the holder, the disc cartridge is easily rotated and positioned at an inaccurate position. When the case (110 and 120) has the first and second flat surface portions 101 and 102 having a surface contact as above, since the disc cartridge 100 is prevented from rotating in the holder 220, a stable loading position guide is possible.

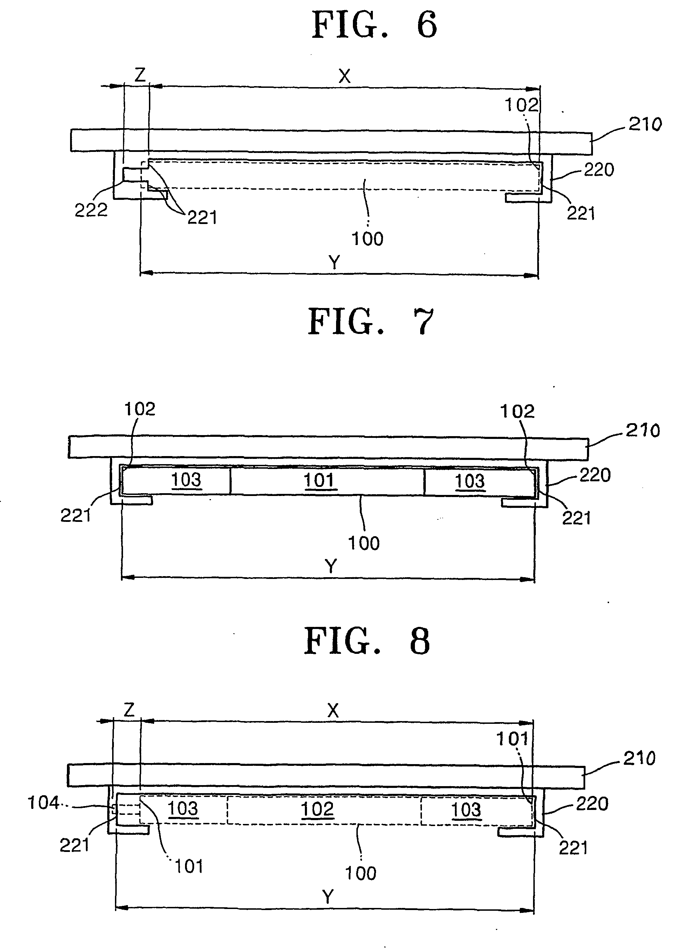

Here, the first flat surface portion 101 is formed to have a surface contact with the side wall 221 of the holder 220 when the cartridge 100 is inserted into the disc drive apparatus in which a loading direction is set to a direction indicated by arrow A of FIG. 4. The second flat surface portion 102 is formed to have a surface contact with the side wall 221 of the holder 220 when the cartridge 100 enters in the disc drive apparatus in which a loading direction is set to a direction indicated by arrow B perpendicular to the direction A (please refer to FIG. 7). Further, a step portion 104 having a round shape and protruding from the first flat surface portion 101 close to the access hole 100a is formed at the first flat surface portion 101. The step portion 104 reinforces an open portion of the case (110 and 120) by the access hole 100a and simultaneously prevents an error of incorrectly loading the cartridge 100 by changing the left and right sides. That is, when the cartridge 100 is loaded such that the first flat surface portion 101 has a surface contact with the inner wall 221 of the holder 220, as shown in FIG. 4, the state of the cartridge 100 being loaded is shown in FIG. 5. A slot portion 222 corresponding to the thickness of the step portion 104 so that the step portion 104 can enter is formed in the holder 220, in addition to the inner wall 221 contacting the first flat surface portion 101. Thus, when the cartridge 100 is inserted in a manner in which the step portion 104 is positioned to the right side of the drawing by changing the left and right sides of the cartridge 100, as indicated by a dotted line of FIG. 5, since the original right portion of the cartridge 100 is thicker than the step portion 104, the cartridge 100 cannot be loaded so that an accidental mis-insertion is prevented from the beginning.

In addition to the above-described mis-insertion case, a method to prevent a case in which the cartridge 100, which is supposed to be inserted into the disc drive apparatus in the direction A, is erroneously inserted in the direction B, that is, the cartridge 100 is inserted with the step portion 104 rotated to face forward, is needed. To prevent the above mis-insertion, a length Y between the second flat surface portions 102 is formed greater than a length X between the first flat surface portions 101. Thus, since the length between the inner walls 221 of both sides of the holder 220 is formed to fit into the length X between the first flat surface portions 101, the cartridge 100 cannot be inserted with a width of the length Y between the second flat surface portions 102 which is greater than the length X, so that the cartridge 100 is hooked by the entrance of the holder 220, as indicated by a dotted line of FIG. 6. Thus, mis-insertion in this direction is prevented as well.

On the contrary, there may be a disc drive apparatus where the loading direction of the cartridge 100 is set to the direction B of FIG. 4. In this case, the second flat surface portion 102 is inserted while having a surface contact with the inner wall 221 of the holder 220, as shown in FIG. 7, which is a normal loading state. Here, a method to prevent mis-insertion of the cartridge 100 in the direction A of FIG. 4 is needed. For this purpose, the length Y between the second flat surface portions 102 is formed to be shorter than a sum of the length X between the first flat surface portions 101 and a length Z of the step portion 104 protruding outwardly. Thus, when the cartridge 100 is loaded in a direction in which the first flat surface portion 101 has a surface contact with the inner wall 221, since the width of the cartridge 100 and the width of the holder 220 are not identical, as shown in FIG. 8, mis-insertion of the cartridge 100 is prevented. Of course, in this case, the inner wall 221 of the holder 220 has a surface contact with the second flat surface portion 102 and is formed to fit into the second flat surface portion 102 so that insertion of the cartridge 100 is guided properly.

When the cartridge 100 is formed to meet the relationship that (Length X between the first flat surface portions 101) < (Length Y between the second flat surface portions 102) < (Length X between the first flat surface portions 101 + Length Z of the step portion 104 protruding outwardly), mis-insertion of the cartridge 100 in a different direction from the set loading direction is prevented from the beginning. Thus, the mis-insertion can be prevented by the above simple structure.

When the disc cartridge 100 having the above structure is inserted into the holder 220 of the disc drive apparatus, since the first or second flat surface portion 101 or 102 has a surface contact with the inner wall 221 of the holder 220, the cartridge 100 is stably and accurately loaded without being rotated. Therefore, when the relationship between the lengths of the respective flat surface portions 101 and 102 and the step portion 104 is set, the mis-insertion in a different loading direction can be prevented.

### Industrial Applicability

As described above, the disc cartridge and the disc drive apparatus according to the present invention has the following advantages.

First, since the corner portions of the case of the disc cartridge have round shapes, the disc drive apparatus can be compact.

Second, since the cartridge has a surface contact with the inner wall of the holder when the cartridge enters in the holder of the disc, a loading work can be stably and accurately performed.

Third, since the relationship between the lengths between the sides of the cartridge is set according to the loading direction along which the cartridge is inserted, mis-insertion of the cartridge can be prevented.

## Claims

1. A disc cartridge including a case (110,120) in which a disc (D) is accommodated and which is guided by both side walls (221) of a holder (220) when inserted in a holder (220) of a disc drive apparatus, wherein the case (110,120) comprises:
flat surface portions (101,102) formed to have a surface contact with both side walls (221) of the holder (220); and
curved surface portions (103) connecting the flat surface portions (101,102);
the flat surface portions comprising first flat surface portions (101) formed at both sides of the case along a first linear direction;
**characterised in that**:
the flat surface portions further comprise second flat surface portions (102) formed at both sides of the case along a second linear direction which is perpendicular to the first linear direction;
wherein a length Y between the second flat surface portions (102) is greater than a length X between the first flat surface portions (101); and
a step portion (104) extending outwardly forming a step is further provided at one side of the first flat surface portion (101);
wherein the length Y between the second flat surface portions (102) is shorter than a sum of the length X between the first flat surface portions (101) and a length Z of the step portion extending outwardly.

2. The disc cartridge as claimed in claim 1, wherein the step portion (104) is a curved surface portion.

3. A system comprising a disc drive apparatus comprising a holder (220) and a disc cartridge according to claim 1, the disc drive apparatus performing a recording and reproduction operation by inserting said disc cartridge (100) into the holder (220) and loading said disc cartridge (100):
wherein the first flat surface portions (101) are formed at both side end portions parallel to a direction in which the cartridge (100) is inserted in the holder (220); and the second flat surface portions (102) are formed at both side end portions perpendicular to the direction in which the cartridge (100) is inserted in the holder;
wherein the step portion (104) has a thickness less than that of the one of the first flat surface portions (101); and
wherein the holder (220) comprises inner walls (221) provided at both sides of the holder to support the disc cartridge (100) being inserted while having surface contact with the first flat surface portions (101), and a slot portion (222) formed at one of the inner walls (221) into which the step portion (104) is inserted.

4. The system as claimed in claim 3, wherein a length between the inner walls (221) is narrower than a length between the second flat surface portions (102).

5. A system comprising a disc drive apparatus comprising a holder (220) and a disc cartridge according to claim 1, the disc drive apparatus being adapted to perform a recording and reproduction operation by inserting said disc cartridge (100) into the holder (220), and loading said disc cartridge (100);
wherein the first flat surface portions (101) are formed at both side end portions perpendicular to a direction in which the cartridge (100) is inserted in the holder (220); and the second flat surface portions (102) are formed at both side end portions parallel to the direction in which the cartridge (100) is inserted in the holder (220);
wherein the step portion (104) has a thickness less than that of the one of the first flat surface portions (101); and
wherein the holder (220) comprises:
inner walls (221) provided at both sides of the holder (220) to support the disc cartridge (100) being inserted while having surface contact with the second flat surface portions (102); and
an interval between the inner walls (221) is narrower than a sum of a length between the first flat surface portions (101) and a protruding length of the step portion (104).

## Patentansprüche

1. Plattenkassette, die ein Gehäuse (110, 120) enthält, in dem eine Platte (D) aufgenommen ist und das von beiden Seitenwänden (221) einer Aufnahme (220) geführt wird, wenn es in eine Aufnahme (220) einer Plattenlaufwerkvorrichtung eingeführt wird, wobei das Gehäuse (110, 120) umfasst:
plane Flächenabschnitte (101, 102), die so ausgebildet sind, dass sie in Flächenkontakt mit beiden Seitenwänden (221) der Aufnahme (220) sind; und
gekrümmte Flächenabschnitte (103), die die planen Flächenabschnitte (101, 102) verbinden;
wobei die planen Flächenabschnitte erste plane Flächenabschnitte (101) umfassen, die in einer ersten linearen Richtung an beiden Seiten des Gehäuses ausgebildet sind;
**dadurch gekennzeichnet, dass**
die planen Flächenabschnitte des Weiteren zweite plane Flächenabschnitte (102) umfassen, die an beiden Seiten des Gehäuses in einer zweiten linearen Richtung ausgebildet sind, die senkrecht zu der ersten linearen Richtung ist;
wobei eine Länge Y zwischen den zweiten planen Flächenabschnitten (102) größer ist als eine Länge X zwischen den ersten planen Flächenabschnitten (101); und
des Weiteren ein Absatzabschnitt (104), der sich nach außen erstreckt und einen Absatz bildet, an einer Seite des ersten planen Flächenabschnitts (101) vorhanden ist;
wobei die Länge Y zwischen den zweiten planen Flächenabschnitten (102) kürzer ist als eine Summe der Länge X zwischen den ersten planen Flächenabschnitten (101) und einer Länge Z des Absatzabschnitts, der sich nach außen erstreckt.

2. Plattenkassette nach Anspruch 1, wobei der Absatzabschnitt (104) ein gekrümmter Flächenabschnitt ist.

3. System, das eine Plattenlaufwerkvorrichtung umfasst, die eine Aufnahme (220) und eine Plattenkassette nach Anspruch 1 umfasst, wobei die Plattenlaufwerkvorrichtung einen Aufzeichnungs-und-Wiedergabe-Vorgang durch Einführen der Plattenkassette (100) in die Aufnahme (220) und Einlegen der Plattenkassette (100) durchführt;
wobei die ersten planen Flächenabschnitte (101) an beiden seitlichen Endabschnitten parallel zu einer Richtung ausgebildet sind, in der die Kassette (100) in die Aufnahme (220) eingeführt wird, und die zweiten planen Flächenabschnitte (102) an beiden seitlichen Endabschnitten senkrecht zu der Richtung ausgebildet sind, in der die Kassette (100) in die Aufnahme eingeführt wird;
wobei der Absatzabschnitt (104) eine Dicke hat, die geringer ist als die des einen der ersten planen Flächenabschnitte (101); und
wobei die Aufnahme (220) Innenwände (221), die an beiden Seiten der Aufnahme vorhanden sind, um die Plattenkassette (100) zu tragen, die eingeführt wird und dabei in Flächenkontakt mit den ersten planen Flächenabschnitten (101) ist, und einen Schlitzabschnitt (222) umfasst, der an einer der Innenwände (221) ausgebildet ist und in den der Absatzabschnitt (104) eingeführt ist.

4. System nach Anspruch 3, wobei ein Länge zwischen den Innenwänden (221) schmaler ist als eine Länge zwischen den zweiten planen Flächenabschnitten (102)

5. System, das eine Plattenlaufwerkvorrichtung umfasst, die eine Aufnahme (220) und eine Plattenkassette nach Anspruch 1 umfasst, wobei die Plattenlaufwerkvorrichtung so eingerichtet ist, dass sie einen Aufzeichnungs-und-Wiedergabe-Vorgang durch Einführen der Plattenkassette (100) in die Aufnahme (220) und Einlegen der Plattenkassette (100) durchführt;
wobei die ersten planen Flächenabschnitte (101) an beiden seitlichen Endabschnitten senkrecht zu einer Richtung ausgebildet sind, in der die Kassette (100) in die Aufnahme (220) eingeführt wird, und die zweiten planen Flächenabschnitte (102) an beiden seitlichen Endabschnitten parallel zu der Richtung ausgebildet sind, in der die Kassette (100) in die Aufnahme (220) eingeführt wird;
wobei der Absatzabschnitt (104) eine Dicke hat, die geringer ist als die des einen der ersten planen Flächenabschnitte (101); und
wobei die Aufnahme (220) umfasst:
Innenwände (221), die an beiden Seiten der Aufnahme (220) vorhanden sind, um die Plattenkassette (100) zu tragen, die eingeführt wird und dabei in Flächenkontakt mit den zweiten planen Flächenabschnitten (102) ist; und
wobei ein Abstand zwischen den Innenwänden (221) schmaler ist als eine Summe einer Länge zwischen den ersten planen Flächenabschnitten (101) und einer Vorstehlänge des Absatzabschnitts (104).

## Revendications

1. Cartouche de disque incluant un boîtier (110, 120) dans lequel un disque (D) est contenu et qui est guidé par les deux parois latérales (221) d'un support (220) lorsque inséré dans un support (220) d'un dispositif d'entraînement de disque, le boîtier (110, 120) comportant :
des parties de surface plate (101, 102) formées pour avoir un contact de surface avec les deux parois latérales (221) du support (220), et
des parties de surface incurvée (103) reliant les parties de surface plate (101, 102),
les parties de surface plate comportant des premières parties de surface plate (101) formées sur les deux côtés du boîtier selon une première direction linéaire,
**caractérisée en ce que** :
les parties de surface plate comportent en outre des secondes parties de surface plate (102) formées sur les deux côtés du boîtier selon une seconde direction linéaire qui est perpendiculaire à la première direction linéaire,
une longueur Y entre les secondes parties de surface plate (102) étant supérieure à une longueur X entre les premières parties de surface plate (101), et
une partie de gradin (104) s'étendant vers l'extérieur formant un gradin est en outre agencée sur un côté de la première partie de surface plate (101),
la longueur Y entre les secondes parties de surface plate (102) étant plus courte qu'une somme de la longueur X entre les premières parties de surface plate (101) et une longueur Z de la partie de gradin s'étendant vers l'extérieur.

2. Cartouche de disque selon la revendication 1, dans laquelle la partie de gradin (104) est une partie de surface incurvée.

3. Système comportant un dispositif d'entraînement de disque comportant un support (220) et une cartouche de disque selon la revendication 1, le dispositif d'entraînement de disque exécutant une opération d'enregistrement et de reproduction en insérant ladite cartouche de disque (100) dans le support (220) et en chargeant ladite cartouche de disque (100) :
dans lequel les premières parties de surface plate (101) sont formées au niveau des deux parties d'extrémité latérale parallèles à une direction dans laquelle la cartouche (100) est insérée dans le support (220), et les secondes parties de surface plate (102) sont formées sur les deux parties d'extrémité latérale perpendiculaires à la direction dans laquelle la cartouche (100) est insérée dans le support,
dans lequel la partie de gradin (104) a une épaisseur inférieure à celle de l'une des premières parties de surface plate (101), et
dans lequel le support (220) comporte des parois intérieures (221) agencées sur les deux côtés du support pour supporter la cartouche de disque (100) qui est insérée tout en ayant un contact de surface avec les premières parties de surface plate (101), et une partie de fente (222) formée dans l'une des parois intérieures (221) dans laquelle la partie de gradin (104) est insérée.

4. Système selon la revendication 3, dans lequel une longueur entre les parois intérieures (221) est plus courte qu'une longueur entre les secondes parties de surface plate (102).

5. Système comportant un dispositif d'entraînement de disque comportant un support (220) et une cartouche de disque selon la revendication 1, le dispositif d'entraînement de disque étant adapté pour exécuter une opération d'enregistrement et de reproduction en insérant ladite cartouche de disque (100) dans le support (220), et en chargeant ladite cartouche de disque (100),
dans lequel les premières parties de surface plate (101) sont formées sur les deux parties d'extrémité latérale perpendiculaires à une direction dans laquelle la cartouche (100) est insérée dans le support (220), et les secondes parties de surface plate (102) sont formées sur les deux parties d'extrémité latérale parallèles à la direction dans laquelle la cartouche (100) est insérée dans le support (220),
dans lequel la partie de gradin (104) a une épaisseur inférieure à celle de l'une des premières parties de surface plate (101), et
dans lequel le support (220) comporte :
des parois intérieures (221) agencées sur les deux côtés du support (220) pour supporter la cartouche de disque (100) qui est insérée tout en ayant un contact de surface avec les secondes parties de surface plate (102), et
un intervalle entre les parois intérieures (221) est plus court qu'une somme d'une longueur entre les premières parties de surface plate (101) et une longueur faisant saillie de la partie de gradin (104).
